# EUROPEAN PATENT APPLICATION

(11) **EP 2 607 657 A2**
(43) Date of publication of application: **26.06.2013**
(21) Application number: 12196985.1
(22) Date of filing: 13.12.2012
(51) Int. Cl.: F02C 7/057, F02C 7/047, F02C 7/045

(54) **Active flow control intake for a gas turbine engine**

(30) Priority: 20.12.2011 GB 201121889
(71) Applicant: Rolls-Royce plc, London SW1E 6AT (GB)
(72) Inventor: Richardson, Giles Anthony, Chatteris, Cambridgeshire PE16 6TP (GB); Sheaf, Christopher, Derby, Derbyshire DE3 0PF (GB)
(74) Representative: Roberts, Nicholas John

(57) **Abstract**

Intakes (11) of gas turbine engines are subject to cross winds and high incidence cross flows which can affect the stability of air to the propulsive fan. An active flow control arrangement (30) for an intake (11) comprises a compressed gas supply pipe (31,33) , a valve arrangement (32), a controller (34), and a compressed gas distribution pipe(50). The supply pipe (31,33) is fluidly connects between a compressed gas source and the valve arrangement (32). The distribution pipe fluidly (50) connects between the valve arrangement (32) and intake surface for supply of compressed gas thereto. The active flow control arrangement is operable to supply compressed gas to the intake surface to prevent separation of a main air flow passing through the intake from the inlet surface thereby maintaining stability of the intake air flow to the fan.

## Description

The present invention relates to intakes and intake linings and more particularly to intakes and intake linings for a nacelle of a gas turbine engine.

The purpose of the intake of civil turbofan gas turbine engines is to ensure that, under all operating conditions, the engine is supplied with the correct quantity of air and that the air has sufficient flow uniformity to allow efficient and stable operation of the engine. The intake design is integrated into the engine nacelle to obtain the lowest level of drag at the operating design point, typically cruise, for maximum efficiency.

For civil turbofans, an optimum intake configuration is a short, near circular, pitot-type intake. This design is highly efficient for subsonic operation, as low levels of pressure loss are achieved under most and possibly all operating conditions.

A pitot intake consists of two geometric regions, a lip and a throat. Downstream of the throat the airflow passes into a diffuser where the flow area is increased up to a fan entry plane. The diffuser acts as a settling length to improve the uniformity of the airflow entering the fan. The lip is a forward section and similar in section to an aerofoil and is shaped to guide the airflow into the engine under all operating conditions; the lip is also optimised to prevent flow separation under cross-wind and incidence operation. If flow separation occurs, this produces significant asymmetry in the total pressure within the intake increasing fan blade stresses and in severe cases engine surge.

The internal surface of the lip is heated, usually with hot air, to minimise or ensure that there is no ice accretion, which could otherwise be shed and damage the engine. Other heating arrangements include electrical heating pads.

The diffuser and throat regions of the intake are often lined with sound-absorbing acoustic panels to reduce noise from the fan and other turbomachinery of the engine.

It is desirable to provide an intake lining system which provides improved flow control to suppress shock waves and/or separation of the airflow from the intake's internal surface that can be caused by cross winds and high incident conditions.

It is also desirable to provide anti-icing and acoustic treatments that minimise weight, complexity and parts count.

In accordance with the present invention there is provided a gas turbine engine comprising an intake defining an inlet surface, a compressed gas source and an active flow control arrangement; the active flow control arrangement comprising a compressed gas supply pipe, a valve arrangement, a controller, a compressed gas distribution pipe; the supply pipe is fluidly connects between the compressed gas source and the valve arrangement and the distribution pipe fluidly connects between the valve arrangement and intake surface for supply of compressed gas thereto; the active flow control arrangement is operable to supply compressed gas to the intake surface to prevent separation of a main air flow passing through the intake from the inlet surface.

The compressed gas source may be any one or more or combination of a low, intermediate or high pressure compressor.

The intake may comprise a lip region, a throat region and a diffuser region, the active flow control arrangement comprises ducting to supply compressed gas to the intake surface in any one or more of the lip region, the throat region and the diffuser region.

The intake may comprise circumferential regions, the active flow control arrangement comprises ducting to supply of compressed gas to the intake surface in any one or more of the circumferential regions.

The circumferential regions may comprise a lower region, side regions and an upper region.

The active flow control arrangement may comprise a valve arrangement and a controller; the controller controls the valve arrangement to control the supply of compressed gas to the intake surface.

The active flow control arrangement may comprise at least one sensor positioned within the intake, the sensor is connected to the controller; the controller controls the valve arrangement to control the supply of compressed gas to the intake surface.

The active flow control arrangement may comprise an array of sensors; the array of sensors having at least one sensor positioned relative to a number of axial and/or circumferential regions of the intake.

The intake may comprise a lining having a surface liner, a spacer and a backing; the surface liner comprises perforations through its thickness and defines at least a part of the intake surface and the spacer comprises a cellular material.

The distribution pipe may fluidly connect to the cellular material, allowing compressed gas to the surface through the surface liner.

In another aspect of the present invention there is provided a method of operating a gas turbine engine comprising a compressor, an active flow control arrangement and an intake defining an inlet surface and over which a main air flow passes; the active flow control arrangement is configured to blow compressor gas onto the surface, the method comprises the steps of determining a possible formation of separation of the main air flow from the surface; and blowing compressor gas onto the surface or into a boundary layer adjacent the surface to prevent separation of the main air flow from the surface.

The step of blowing compressor gas onto the surface or into a boundary layer adjacent the surface to prevent separation of the main air flow from the surface may comprise, determining an axial and/or a circumferential location(s) of a possible formation of separation of the main air flow from the surface.

The active flow control arrangement comprises sensors located in the intake and a controller; the step of determining a possible formation of separation of the main air flow from the surface comprises the steps of sensing the pressure of the main gas flow over the surface, and comparing the sensed pressure to a predetermined value where possible formation of separation of the main air flow from the surface may occur.

The step of determining a possible formation of separation of the main air flow from the surface may comprise the steps of the controller receiving engine operational parameter(s), and comparing the engine operational parameter(s) to a predetermined value where possible formation of separation of the main air flow from the surface may occur.

The engine operational parameter(s) may comprise any one or more or combination of a flight cycle condition, an airspeed, an angle of incidence, an engine throttle position, cross-wind strength and direction and weight on wheels.

The method may comprise the step of pulsing the compressed gas.

Embodiments of aspects of the present invention will now be described by way of example only with reference to the accompanying drawings in which:
Figure 1 is a schematic section through a gas turbine engine and nacelle including an active control flow arrangement;
Figure 2 is a schematic and enlarged section of part of an intake of a nacelle of Figure 1;
Figure 3 is another schematic and enlarged section of part of an intake of a nacelle of Figure 1;
Figure 4 is schematic view of a distribution network of the active control flow arrangement;
Figure 5 is schematic view of another distribution network of the active control flow arrangement;
Figure 6 is a schematic illustration of part of the active control flow arrangement.

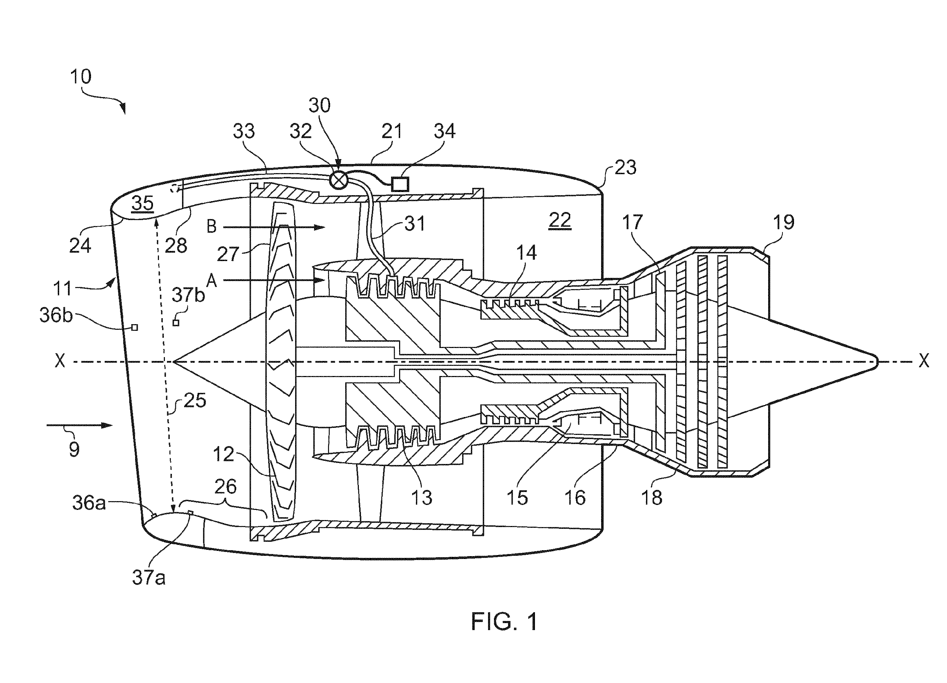

With reference to Figure 1, a ducted fan gas turbine engine generally indicated at 10 has a principal and rotational axis X-X. The engine 10 comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 12, a bypass duct 22 and a bypass exhaust nozzle 23.

The gas turbine engine 10 works in a conventional manner so that a main air flow 9 entering the intake 11 is accelerated by the fan 12 to produce two air flows: a first air flow A into the intermediate pressure compressor 14 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines 16, 17, 18 respectively drive the high and intermediate pressure compressors 14, 13 and the fan 12 by suitable interconnecting shafts.

The intake, generally shown at 11, is a pitot-style intake consisting of the geometric regions, a lip 24, a throat 25 and a diffuser 26. The lip 24 is a forward section and guides air into the engine under all operating conditions; the geometric shape of the lip is also optimised to minimise flow separation under cross-wind and incidence operation. If flow separation occurs, this produces significant asymmetry in the total pressure within the intake increasing fan blade stresses and in severe cases engine surge.

Downstream of the lip 24 the intake contracts to a minimum area sized for the engine flow requirements and is known as the throat 25. Downstream of the throat the main air flow 9 passes into the diffuser 26 where the flow area is increased before a fan entry plane 27. The diffuser acts as a settling length to improve the uniformity of the airflow entering the fan 12.

Flow separation of air entering the intake 11 and a surface 28 of the intake can occur as a result of adverse air flow conditions such as cross flows and high incidence conditions during operation of the gas turbine engine and which can reduce engine efficiency. It is adverse pressure gradients within the flow and particularly near the surface 28 that can cause shock waves. Separation of air from the surface 28 can cause total pressure flow asymmetry and it is therefore an object to suppress any possible separation. These shock waves or adverse pressure gradients in the main flow are generally caused by cross wind and high incidence conditions to the intake causing boundary layer separation from the surface. An active flow control arrangement 30 is provided to blow or present a control gas flow to specific regions of the intake 11 to obviate or alleviate separation by minimising adverse pressure gradients by re-energising the boundary layer.

The active flow control arrangement 30 locally re-energises the main air flow 9 into the intake 11 by injecting or presenting a control gas flow in the main airflow or over the surface 28 and preferably into a boundary layer adjacent the intake surface. By supplying a control flow and re-energising the boundary layer prevention or reduction of flow separations as a result of shock waves or adverse pressure gradients is possible.

The location of shockwaves on an intake surface is dependent upon one or many operational and environmental conditions. For a cross wind situation shockwaves are generally located near to a leading edge of the intake lip, but for high incidence situations shockwaves will be closer to the inlet throat. Thus by selectively applying localised flow control gas through the intake surface it is possible to minimise separations around part or all of the intake thereby minimising the amount of control airflow gas required.

As indicated generally the active flow control arrangement 30 can be incorporated or act as part of an acoustic liner system giving additional noise attenuation benefits and duplicity of operation so minimising weight and other complications compared to providing separate linings for avoiding flow separation. Furthermore, the active flow control arrangement 30 may be utilised in de-icing functions providing a third function.

As schematically shown in Figure 1, the active flow control arrangement 30 comprises a system of pipework 31, 33 connecting between a control gas source(s) (12, 13, 14) and a chamber 35 defined in the intake 11. A valve arrangement 32 is operable via an electronic unit 34 which may be separate or part of an engine electronic control (EEC). The valve arrangement 32 is operable to control the amount and delivery location of the control gas flow around part or all the intake. The control fluid source is shown as the intermediate compressor 13; however, other sources or combined sources include any compressor and/or turbine. EEC logic control and operation of the valve arrangement 32 can consider operational conditions such as relative air speed and direction, flight cycle, engine power condition and sensor readings. Local sensors can be positioned within the intake to monitor parameters, such as local pressures around the intake.

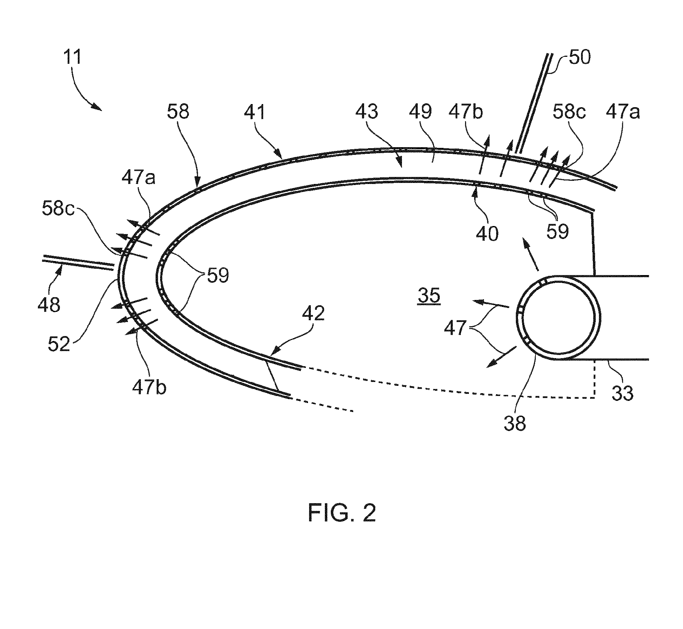

**Figure 2** is a schematic illustration of part of the intake 11 shown in Figure 1 and comprising a lining 40. The lining 40 comprises a surface liner 41, a spacer 43 and a backing 42. The surface liner 41 and the backing 42 are separated and spaced apart by the spacer 43 to provide structural strength. Usually, the spacer is a honeycomb material 43, but other cellular materials can be used.

The surface liner 41 comprises perforations through its thickness to fluidly connect cells 49 of the cellular material with the main air flow 9 in the inlet 11 or other duct of a gas turbine engine. The combination between the perforations and cells absorb acoustic energy as is well known in the art. Double layered acoustic liners may also be used herein.

The pipework 31, 33 connects to a distribution pipe 38, sometimes known as a piccolo pipe, for distribution of fluid around the chamber 35. The chamber is annular although it may comprise circumferential segments. Similarly, the distribution pipe 38 is annular and in this case is housed within the chamber 35. However, the distribution pipe 38 may also be circumferentially segmented and/or housed external to the chamber 35.

The surface liner 41 defines bespoke boundary-layer apertures 58 although they may be part of the array of perforations. The backing 42 defines inlet apertures 59 that allow fluid communication between the chamber 35 and the intake surface 28. Pressurised gas, control fluid flow 47, enters the chamber 35 and flows through the apertures 59, the cells 49 and exits through the surface liner 41. The boundary-layer apertures 58 are positioned at specific locations in order to inject the control fluid flow 47a, 47b at those specific regions of the lining 40.

The active flow control arrangement 30 locally re-energises the boundary layer of the main air flow, in order to prevent the main air flow from separating from the surface 28 and particularly adjacent a shock wave 48, 50. The location and occurrence of shock waves adjacent the intake surface 28 is dependent on the operating condition of the engine, aircraft and environmental conditions. For a cross-wind case shock waves, indicated at 48, usually occur near a leading edge 52 of the intake lip 24. Where the ingested airflow 9 is at a relatively high incidence angle to the inlet the shock waves, indicated at 50, usually occur near to the intake throat 25. By applying this localised flow control through the lining structure, flow separations around the intake can be minimized. In addition, the lining structure also operates as an acoustic lining, particularly in the lip region of the intake.

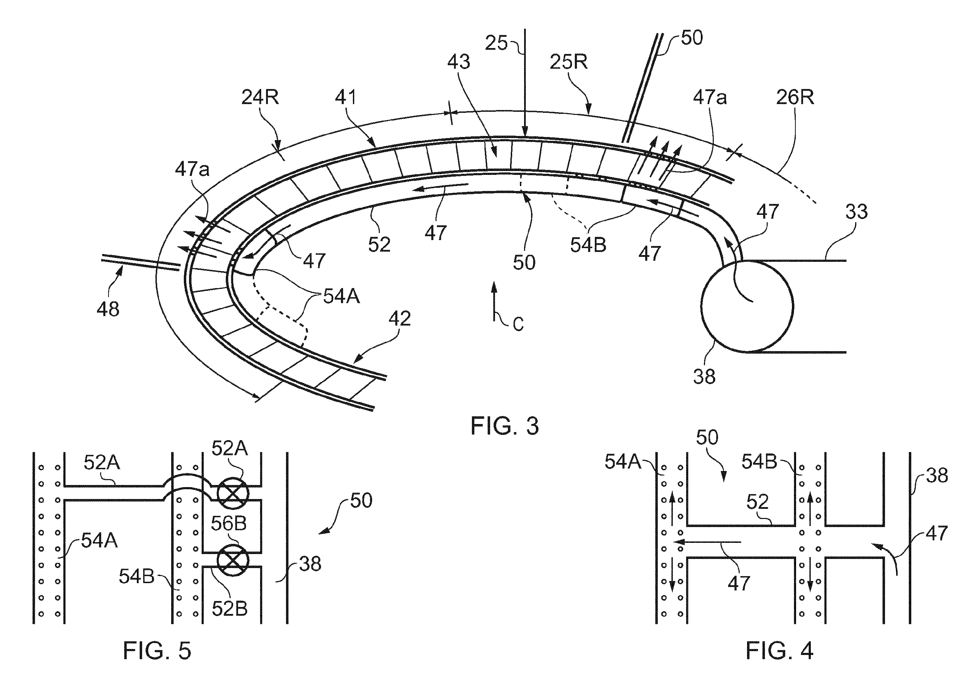

**Figure 3** is another schematic and enlarged section of part of an intake of the nacelle of Figure 1. Here the intake 11 comprises the lip region 24, the throat region 25 and further downstream a diffuser region 26. The active flow control arrangement 30 further comprises ducting 50 to supply the compressed gas to the intake surface in the lip region 24, the throat region 25 and the diffuser region 26. It is within these regions that shock waves or main gas flow 9 separation may occur.

The pipework 31, 33 connects to the distribution pipe 38 which then connects to a distribution network 50. The distribution network 50 comprises ducting having generally axial conduits 52 connecting between generally circumferential conduits 54A, 54B. The circumferential conduits 54A and 54B feed compressed gas to the lining 40 and then through the surface liner 41 and over the surface to re-energise the boundary layer preventing main flow separation and avoiding adverse pressure gradients on the boundary layer.

Additional circumferential conduits 54 are shown in dashed lines to feed compressed gas to further areas where separation of the main gas flow from the surface 28 may occur.

**Figure 4** shows a distribution network 50 having conduit 52 connecting between the distribution pipe 38 and two circumferential conduits 54A and 54B. The circumferential conduits 54 feed compressed gas to the lining 40 in two axial positions, in this case to the lip and throat regions 24R and 25R respectively. Further circumferential conduits can be fed via axial conduit 52 or additional axial conduits, thereby other or additional locations of the surface 28 can be fed control gas 47.

**Figure 5** shows another distribution network 50 having axial conduits 52A and 52B connecting between the distribution pipe 38 and each of two circumferential conduits 54A and 54B respectively. In this case, controllable valves 56A and 56B are provided on the axial conduits 52A and 52B. the valves 56A and 56B are operable to allow control gas 47 to either one or both or more circumferential conduits 54A and 54B. Alternatively, the valves 56A and 56B may be provided on the junction of the distribution pipe 38 and axial conduits or circumferential conduits 54A and 54B and axial conduits 52A and 52B.

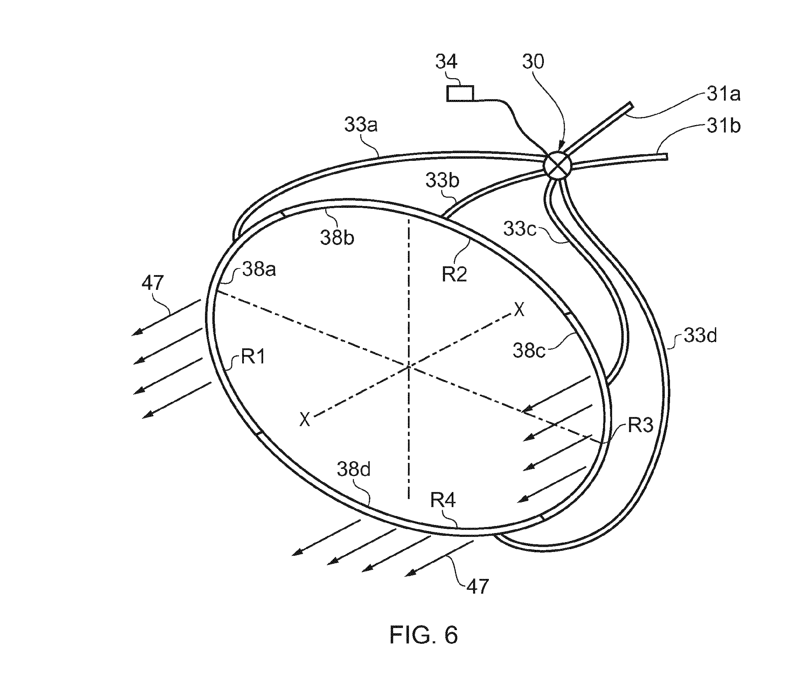

**Figure 6** is a schematic illustration of part of the active control flow arrangement. Shown are two supply pipes 31 a and 31 b coming from two different sources of compressed gas. The two supply pipes 31 a and 31 b connect to the valve arrangement 30 and further pipes 33a, 33b, 33c and 33d take compressed gas 47 to four zones or regions R1, R2, R3 and R4 around the circumference of the intake 11. The circumferential regions R1, R2, R3 and R4 comprise a lower region (R4), side regions (R1, R3) and an upper region (R2).

The valve arrangement 30 is operable via controller 34 to select either one of the two (or more) compressed gas supplies or both simultaneously. The valve arrangement 30 is operable via controller 34 to select which pipe or pipes 33a, 33b, 33c and 33d takes compressed gas 47 to which of the four (or more) zones or regions R1, R2, R3 and R4.

The two gas supplies are from two sources of different pressures and thus the pressure of the gas can be delivered in any desired quantity or temperature to any part of the intake surface 28. The two or more sources of compressed gas can be from different stages of the same compressor and/or different compressor including the intermediate and high pressure compressors as well as the low pressure compressor or fan.

Referring back to Figure 1, further the active flow control arrangement 30 comprises at least one sensor 36a, 36b, 37a, 37b positioned within the intake. The sensor(s) is connected to the controller 34 which controls the valve arrangement 30 to control the supply of compressed gas to the intake surface 28. An array of sensors 36a, 36b, 37a, 37b comprises at least one sensor positioned relative to a number of axial and/or circumferential regions of the intake. Thus the active flow control arrangement 30 is capable of supplying control gas 47 to any one or more regions of the intake surface 28 where a sensor senses a parameter that passes a predetermined threshold value indicative of the possibility of flow separation.

The gas turbine engine 10 may be operated by determining a possible formation of separation of the main air flow from the surface 28 and blowing compressor gas onto the surface or into a boundary layer adjacent the surface to prevent separation of the main air flow from the surface 28. Using the above described apparatus, determining the axial and/or circumferential location(s) of a possible formation of separation of the main air flow from the surface (28) enables a minimum amount of control gas to be supplied. Off-taking compressed gas from a compressor can be detrimental its performance and therefore engine efficiency so minimising the amount of compressed gas used is beneficial.

Where the active flow control arrangement 30 comprises sensors 36a, 36b, 37a, 37b located in the intake 11 and their sensed parameters input to the controller 34 it is possible to determine the possible formation of separation of the main air flow from the surface 28 comprises the steps of by sensing the parameter, in this case usually pressure, of the main gas flow over the surface 28. The sensed pressure is then compared to a predetermined or threshold value where it is known that a possible formation of separation of the main air flow from the surface 28 may occur.

Alternatively, the controller 34, programmed with an algorithm, receives engine and / or flight operational parameters, and compares these to a predetermined or threshold value where it is known that a possible formation of separation of the main air flow from the surface 28 may occur. The engine operational parameter(s) comprise any one or more or combination of a flight cycle condition, airspeed, an angle of incidence, an engine throttle position, cross-wind strength and direction and weight on wheels.

An efficient way of using compressed gas is by pulsing the flow. Pulsing may be either stopping and starting the flow or modulating the mass flow rate. Gas jets issuing from the holes not only inject a quantity of air into the main gas flow but the jet causes secondary vortices to form around it and which help stabilise and/or reduce the formation of separation. Where the jets are pulsed these secondary vortices persist downstream even after the jet is reduced or switched off. Thus by pulsing the supply of gas to the holes that form the jets, the same beneficial effect of separation suppression can be realised with a significantly reduced high pressure bleed flow and improved system efficiency.

The active flow control arrangement and its method of use is intended to prevent possible formation of separation of the main air flow from the surface 28. However, by combining the apparatus and method of using it with an acoustic liner the benefits of both can still be achieved. Indeed the perforations in the lining 41 can be used to supply the control gas to the surface and / or the boundary layer to re-energise the main flow.

Where environmental conditions exist to cause possible ice formations on the intake, the active flow control arrangement can also be operated to supply heated compressed gas to the surface of the intake and thereby prevent ice build up. The control valves are operable to impart pulsing to the anti-ice gas flow through the (acoustic) liner to maximise shock suppression, while minimising the use of anti ice air. In this case, the sensors 36a, 36b, 37a, 37b also sense temperature and relay this parameter to the EEC for processing in consideration of operation of the active flow control arrangement as an anti-icing system. The EEC 34 may decide to preferentially use hotter gas from a different source either mixed or discreet for anti-icing measures rather than possibly cooler gas for preventing main air flow separation.

Thus there is disclosed an active flow control arrangement which is capable of delivering a control gas to the intake of a gas turbine engine to help prevent main air flow separation and/or ice accretion while attenuating noise from the turbomachinery. The active flow control arrangement provides minimal use of compressed gas and weight reduction, while greatly improving the quality of the main air flow into the engine for improved operational performance and reduction of damage. Indeed one advantageous aspect of the active flow control arrangement is that it is applicable in conjunction with current and possibly future acoustic liners with relatively little or no modification to the acoustic liners performance. Thus one advantage is the combination of acoustic liners with the active flow control arrangement.

The active flow control arrangement may also be used to supply relatively warm air for anti-icing purposes. As will be apparent to the skilled artisan, the active flow control arrangement can be either scheduled or purely responsive to real time telemetry from the sensors. The sensors may be temperature and/or pressure sensors.

Other embodiments will be apparent to the skilled person from the teachings herein. For example, where a double layer liner is used the compressed gas supply could be routed circumferentially and/or axially through the radially outer layer of spacer material. Thus the distribution network 50 is formed by the radially outer layer of spacer material.

## Claims

1. A gas turbine engine (10) comprising an intake (11) defining an inlet surface (28), a compressed gas source (12, 13, 14) and an active flow control arrangement (30);
the active flow control arrangement (30) comprising a compressed gas supply pipe (31), a valve arrangement (30), a controller (34), a compressed gas distribution pipe (33);
the supply pipe is fluidly connects between the compressed gas source and the valve arrangement and the distribution pipe (33) fluidly connects between the valve arrangement and intake surface for supply of compressed gas thereto;
the active flow control arrangement (30) is operable to supply compressed gas to the intake surface to prevent separation of a main air flow (9) passing through the intake from the inlet surface.

2. A gas turbine engine (10) as claimed in claim 1 wherein the compressed gas source is any one or more or combination of a low, intermediate or high pressure compressor (12, 13, 14).

3. A gas turbine engine (10) as claimed in any one of claims 1-2 wherein the intake (11) comprises a lip region (24), a throat region (25) and a diffuser region (26), the active flow control arrangement (30) comprises ducting to supply compressed gas to the intake surface in any one or more of the lip region (24), the throat region (25) and the diffuser region (26).

4. A gas turbine engine (10) as claimed in any one of claims 1-3 wherein the intake (11) comprises circumferential regions (R1, R2, R3, R4), the active flow control arrangement (30) comprises ducting to supply of compressed gas to the intake surface in any one or more of the circumferential regions (R1, R2, R3, R4).

5. A gas turbine engine (10) as claimed in claim 4 wherein the circumferential regions (R1, R2, R3, R4) comprise a lower region (R4), side regions (R1, R3) and an upper region (R2).

6. A gas turbine engine (10) as claimed in any one of claims 1-5 wherein the active flow control arrangement (30) comprises a valve arrangement (30) and a controller (34); the controller (34) controls the valve arrangement to control the supply of compressed gas to the intake surface (28).

7. A gas turbine engine (10) as claimed in claim 6 wherein the active flow control arrangement (30) comprises at least one sensor (36a, 36b, 37a, 37b) positioned within the intake, the sensor is connected to the controller (34); the controller (34) controls the valve arrangement to control the supply of compressed gas to the intake surface (28).

8. A gas turbine engine (10) as claimed in any one of claims 6-7 wherein the active flow control arrangement (30) comprises an array of sensors (36a, 36b, 37a, 37b); the array of sensors having at least one sensor positioned relative to a number of axial and/or circumferential regions of the intake.

9. A gas turbine engine (10) as claimed in any one of claims 1-8 wherein the intake (11) comprises a lining (40) having a surface liner (41), a spacer (43) and a backing (42); the surface liner (41) comprises perforations through its thickness and defines at least a part of the intake surface (28) and the spacer comprises a cellular material.

10. A gas turbine engine (10) as claimed in claim 9 wherein the distribution pipe (33) fluidly connects to the cellular material (49), allowing compressed gas to the surface through the surface liner (41).

11. A method of operating a gas turbine engine (10) comprising a compressor (13, 14), an active flow control arrangement (30) and an intake (11) defining an inlet surface (28) and over which a main air flow (9) passes;
the active flow control arrangement (30) is configured to blow compressor gas onto the surface,
the method comprises the steps of
determining a possible formation of separation of the main air flow from the surface (28); and
blowing compressor gas onto the surface or into a boundary layer adjacent the surface to prevent separation of the main air flow from the surface (28).

12. A method of operating a gas turbine engine (10) as claimed in claim 11 wherein the step of blowing compressor gas onto the surface or into a boundary layer adjacent the surface to prevent separation of the main air flow from the surface (28) comprises,
determining an axial and/or a circumferential location(s) of a possible formation of separation of the main air flow from the surface (28).

13. A method of operating a gas turbine engine (10) as claimed in claim 11 or 12 wherein the active flow control arrangement (30) comprises sensors (36a, 36b, 37a, 37b) located in the intake (11) and a controller (34);
the step of determining a possible formation of separation of the main air flow from the surface (28) comprises the steps of
sensing the pressure of the main gas flow over the surface (28), and comparing the sensed pressure to a predetermined value where possible formation of separation of the main air flow from the surface (28) may occur.

14. A method of operating a gas turbine engine (10) as claimed in claim 11 or 12 wherein the active flow control arrangement (30) and a controller (34);
the step of determining a possible formation of separation of the main air flow from the surface (28) comprises the steps of
the controller receiving engine operational parameter(s), and comparing the engine operational parameter(s) to a predetermined value where possible formation of separation of the main air flow from the surface (28) may occur.

15. A method of operating a gas turbine engine (10) as claimed in claim 14 wherein the engine operational parameter(s) comprise any one or more or combination of a flight cycle condition, an airspeed, an angle of incidence, an engine throttle position, cross-wind strength and direction and weight on wheels.
